# EUROPEAN PATENT APPLICATION

(11) **EP 1 363 385 A1**
(43) Date of publication of application: **19.11.2003**
(21) Application number: 02425295.9
(22) Date of filing: 15.05.2002
(51) Int. Cl.: H02M 1/12, H02M 3/156

(54) **Zero-cross detection method of the current flowing in an inductor driven in switched mode and a relative driving circuit**

(71) Applicant: STMicroelectronics S.r.l., 20041 Agrate Brianza (Milano) (IT)
(72) Inventor: Aiello, Natale, 95039 Trecastagni (IT); Gennaro, Francesco Giovanni, 95125 Catania (IT)
(74) Representative: Pellegri, Alberto

(57) **Abstract**

A method for detecting the null current condition in an inductor a PWM driven inductor connected between a voltage source node and a second circuit node of a line for outputting current to a load, comprises time differentiating the voltage present on the second node generating a derivative signal, monitoring the instant when the derivative signal becomes negative and signaling the verification of a null current condition in the inductor each time that the derivative signal becomes negative.

A fully integrable PWM driving circuit implementing this method, detecting the null current condition in an inductor connected between a voltage source node and a second node of a line for outputting current toward a load, comprises a power switch connected between the second node and a ground node of the circuit, a PWM control circuit of the power switch in function of load conditions including a bistable stage coupled to a control terminal of the power switch, and comprises a time differentiating circuit means coupled to the second node, generating a pulse setting the bistable output stage when the voltage on the second node drops.

## Description

### FIELD OF THE INVENTION

The present invention relates to switching circuits and more precisely to a method for detecting the null current condition in a PWM driven inductor and a related driving circuit implementing this method.

### BACKGROUND OF THE INVENTION

Switching circuits using reactive components such as inductors and capacitors are increasingly employed for converting power.

Among these converters there is a family characterized by the use of a PWM driven inductor, a terminal of which is coupled to a rectified voltage supply line and the other terminal to a PWM drive switch. In practice, one or more switches alternate conduction phases to cut-off phases, making the inductance absorb energy from the supply during the conduction phase and release it to a load circuit during the successive cut-off phase.

One of the problems that are encountered in realizing these circuits is that of precisely determining the instant in which the switch must be switched on. Often, this switching takes places when the current in the inductor becomes null, in order to charge again the inductor only after it has delivered to the load all the stored energy.

This situation is encountered, for example, in power supplies using converters functioning at high frequency that, for reasons of space and of costs, are often preferred because they do not require the use of classical transformers of the mains voltage. Because of their widespread use and importance, in the following description reference will be made to power supplies using DC-DC switching converters for highlighting the addressed technical problem. However, the considerations that will be made hold, *mutatis mutandis,* for any circuit employing a PWM driven inductor and wherein the current in the inductor becomes null between two consecutive switchings towards the voltage source.

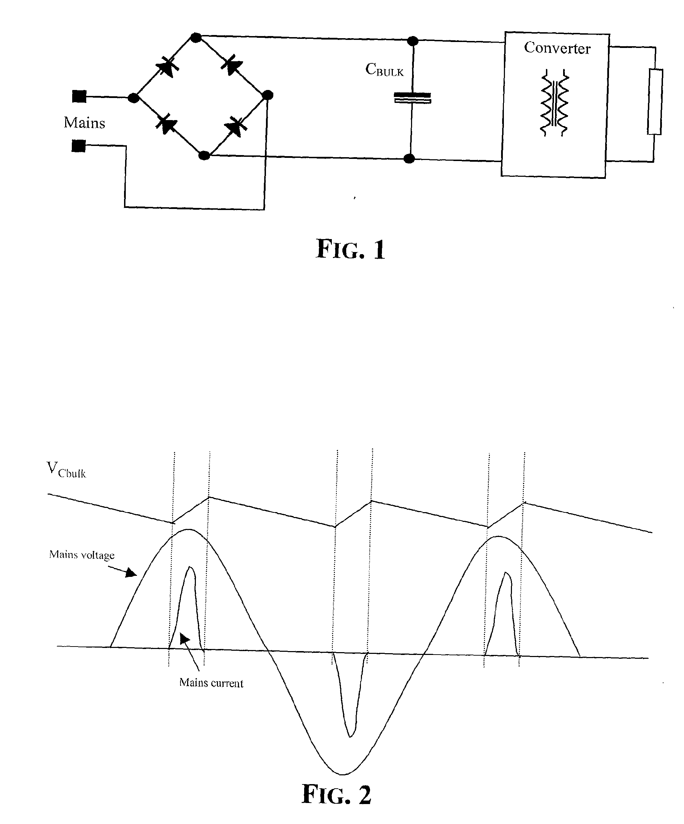

Many of the electronic devices that are used today are powered by power supplies that are directly connectable to the mains, such as that depicted in Figure 1. The mains voltage is rectified by means of a rectifying bridge, and successively filtered with a relatively large capacitor C_{BULK}. As may be noticed in Figure 2, the current absorbed from the mains is discontinuous because it is absorbed only when charging the capacitor C_{BULK}, raising the voltage V_{Cbulk}.

These power supplies cause a strong harmonic content of the mains current sensibly reducing the power factor.

Enforced "Power Quality" specifications impose the use of circuits that correct the nonlinearity of the current absorbed from the mains by making it almost sinusoidal to remain below a certain maximum tolerable limit of harmonic content.

There are many techniques of improving the power factor: some techniques contemplate the use of passive networks using capacitors and inductors; other techniques contemplate the use of active circuits for correcting the power factor. In the latter case, which is the case of interest, the power supply has one or more switches that are switched in order to charge the bulk capacitor during the whole half-wave of the AC network voltage by absorbing current at high frequency and at a level proportional to the instantaneous value of the mains voltage.

As it is well known to a skilled person, there are different topologies of power factor correction circuits, and each of them has advantages and drawbacks depending on the output power. One of the most used topologies for circuits of output power less than 80W is the so-called "Boost" topology with TM (Transition Mode) control, with fixed turn on time T_{ON} and variable frequency.

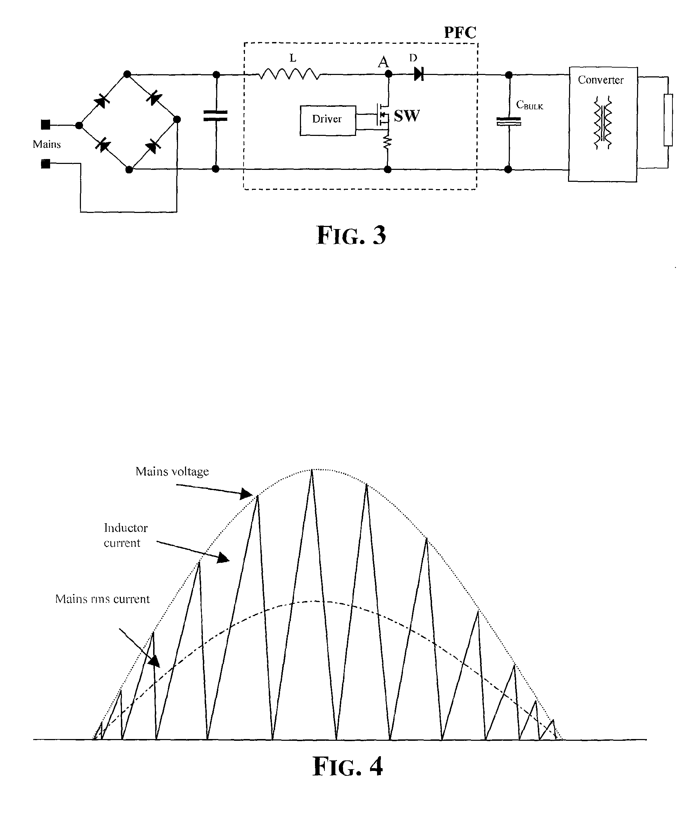

Basically, the power supply of Figure 3 is constituted by a rectifying bridge that rectifies the AC mains voltage, a power factor correction circuit PFC, a bulk capacitor C_{BULK} and a converter CONVERTER, which may be a DC-DC or a DC-AC.

The power factor correction circuit PFC, which in the considered case has a boost topology, has an inductor L driven in PWM mode by a switch SW turned on or off by a driving circuit DRIVER. A clamping diode D prevents inversion of the current that correctly must flow from the voltage source toward the converter

Figure 4 depicts the waveform of the current flowing in the inductor L. As may be noticed, the switch SW is turned on only after the current in the inductor has become null, and successively is turned off to let the inductor deliver current toward the load. In this way the mean value of the absorbed current is sinusoidal.

According to a transition mode TM control, the switch SW remains in conduction for a constant time T_{ON}, the value of which depends on the load. The value of the current circulating in the inductor L when this time interval expires is$\text{I} \text{=} \frac{{\text{V}}_{\text{IN}}}{\text{L}} \text{·} {\text{T}}_{\text{ON}}$

The inductor is turned off and the stored energy: *E* = $\frac{\text{1}}{\text{2}}$*· L*·*I*², transfers through the clamping diode D to the bulk capacitor C_{BULK}, in form of a charging current (discharging current of the inductance).

The switch is turned on again when energy transfer is completed, that is after the current in the inductor has become null.

Generally, two alternative techniques are used for detecting the null current condition in the inductor:
- connecting in series to the inductor a sensing resistance and monitoring the voltage drop on it;
- realizing an auxiliary winding magnetically coupled to the inductor L and using the induced signal on the auxiliary winding for determining the turn on instant of the switch.

Both techniques have the following drawbacks:
- the first technique implies a power dissipation on the current sensing resistor, and as a consequence a reduction of the efficiency of the system;
- the second technique requires the use of a transformer with a consequent increase of costs;
- none of these techniques is amenable to a complete integration on silicon.

### OBJECT AND SUMMARY OF THE INVENTION

An object of the present invention is to provide a method for detecting the null current condition in an inductor driven in switched mode that, differently from the known methods, can be implemented in circuits that are fully integrable on silicon with remarkable advantages in terms of simplification and reduction of costs.

In circuits using a PWM driven inductor, a first terminal of which is coupled to a voltage source node and a second terminal of which is coupled to a line for outputting a current toward a load and to a driving switch that alternates conduction phases and nonconduction phases, when the current in the inductor becomes null, a drop of the voltage on the circuit node of the second terminal of the inductor that becomes equal to the voltage present on the first terminal is observed.

It has been found that by detecting this occurrence for establishing a nullification of the current circulating in the inductor, important advantages may be achieved in terms of simplifying the circuit and of allowing the realization of the whole driving circuit in an integrated form, because the use of a current sensing resistor or of an auxiliary winding is no longer required.

An object of the invention is a method for detecting the null current condition in a PWM driven inductor, having a first terminal connected to a voltage source node and a second terminal connected to a line for outputting current toward a load, that comprises:
- time differentiating the voltage on the second terminal of the inductor generating a time derivative signal,
- monitoring the instant when said derivative signal becomes negative, and
- signaling the nullification of the current flowing in the inductor each time said derivative signal becomes negative.

The voltage on the second terminal of the inductor may also be preliminarily filtered before differentiating it.

Another object of the present invention is a PWM driving circuit of an inductor while detecting the nullification of the current flowing in the inductor, a first terminal of which is connected to a voltage source node and the other or second terminal to a line for outputting current toward a load and comprising a power switch connected between said other or second terminal and a ground node of the circuit, a PWM control circuit of the switch in function of load conditions, having a bistable output stage coupled to a control terminal of the switch.

The driving circuit of the invention comprises a differentiating line or stage coupled to the circuit node of the second terminal of the inductor. The derivative signal that is produced by the differentiating stage when the voltage on the second terminal of the inductor drops because of the nullification of the current circulating in the inductor, becomes negative and causes the switching of a monitoring circuit that in turn sets the bistable output circuit and thus turns on the power switch.

The driving circuit of the invention allows the realization of boost converters and power factor correction circuits of power supplies, without requiring external components (not integrable) such as current sensing resistors or auxiliary windings magnetically coupled to the inductor, for detecting a null current condition in the inductor.

The invention is more precisely defined in the annexed claims.

### BRIEF DESCRIPTION OF THE DRAWINGS

The different aspects and advantages of the invention will become even more evident through a detailed description of embodiments of the invention and by referring to the attached drawings, in which:
**Figure 1** is a basic block diagram of a power supply;
**Figure 2** shows waveforms of the most important electrical quantities of the circuit of Figure 1;
**Figure 3** is a basic block diagram of a power supply provided with a power factor correction circuit;
**Figure 4** shows waveforms of signals of the circuit of Figure 3, when controlled in a "transition mode" (TM);
**Figures 5a and 5b** are basic block diagrams of power supplies embodying the driving circuit of the present invention;
**Figure 6** shows waveforms of the most important signals of the circuits of figures 5a-5b;
**Figure 7** shows a preferred embodiment of an integrated device of this invention;
**Figure 8** is a circuit diagram of a converter using having the integrated device of this invention of Figure 7.

### DESCRIPTION OF SEVERAL EMBODIMENTS OF THE INVENTION

It has been observed that, in boost converters and power factor correction circuits, characterized by comprising a PWM driven inductor a terminal of which is connected to a voltage source node and the other or second terminal to a line for outputting current toward a load, when the current in the inductor becomes null, the voltage on the second terminal diminishes becoming equal to the voltage present on the first terminal, for example corresponding to a rectified mains voltage node.

According to the method of this invention, the null current condition in the inductor is effectively detected by time differentiating the voltage on the second terminal and causing the signaling of a null current condition when such a time derivative signal becomes negative because of a drop of the voltage on the second terminal.

If the voltage on the second node is excessively noisy such to cause false null current verifications, it may be filtered from noise before differentiating it.

In order to better illustrate the peculiarity of the driving circuit of this invention, an application to a common boost converter will be described in detail, but the considerations that will be made hold, *mutatis mutandis,* for any other circuit employing a PWM driven inductor.

Figure 5a is a basic block diagram of a power supply based on a boost converter that uses the driving circuit of the invention (enclosed in the dash-line perimeter).

A rectifying bridge rectifies the AC mains voltage and provides a rectified voltage to a boost converter that drives an electrical load LOAD.

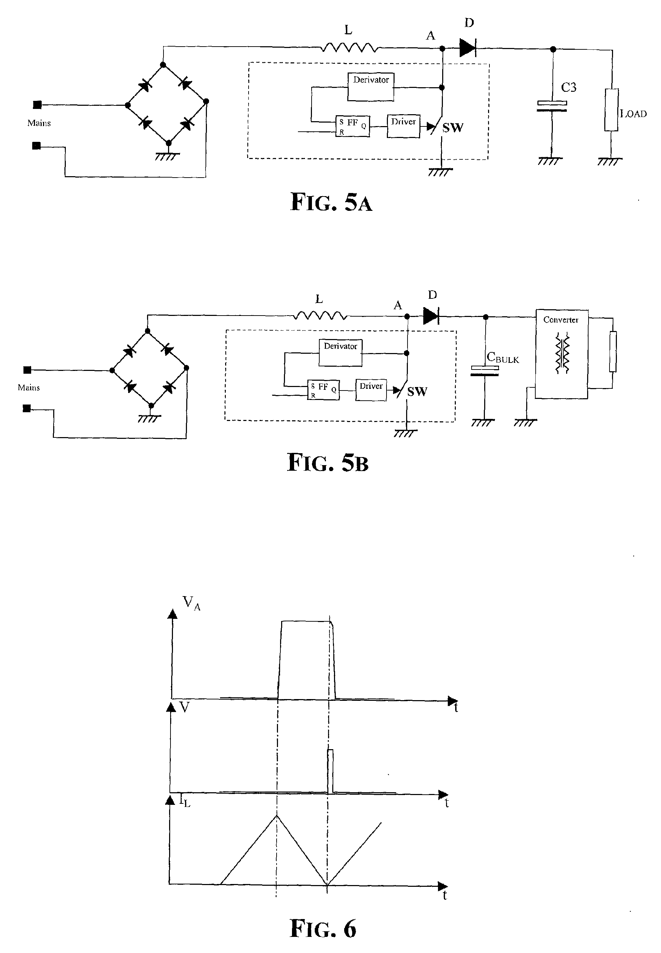

Figure 5b is a basic block diagram of a power supply that includes a power factor correction circuit using the driving circuit of the invention, a bulk capacitor C_{BULK} and a converter, which can be either a DC-DC or an AC-DC converter.

Referring to Figures 5a and 5b, let us suppose that the switch SW be in a conduction state. The inductor L is charged for a time that depends on the load conditions and, as a consequence, a current, whose maximum value is function of the instantaneous input voltage (rectified voltage), flows in the inductor.

Successively, the switch is commanded to an off state by applying a voltage on the reset input R of the flip-flop FF. During this off phase, the energy stored in the inductor is transferred to the capacitor C in the form of a charge current flowing through the clamping diode D.

This happens only if the voltage on the second node A of the second terminal of the inductor is:${\text{V}}_{\text{A}} {\text{=V}}_{\text{OUT}} {\text{+V}}_{\text{BE}} {\text{>V}}_{\text{IN}}$ where V_{IN} is the instantaneous rectified voltage at the output of the rectifying bridge, and V_{BE} is the base-emitter voltage of the power switch SW.

The voltage V_{A} is substantially constant when the inductor transfers energy toward the load. In this time interval, which is function of the voltage difference on the terminals of the inductor L, the current in the inductor decreases from the value reached at the end of the charging previous phase, until it becomes null. When this current becomes null, the voltage on the node A drops, becoming equal to the rectified input voltage V_{IN}.

Figure 6 depicts the main signals of the power supplies of Figures 5a and 5b. When the current I_{L} in the inductor becomes null, the voltage V_{A} on the node A decreases. The block DERIVATOR that includes a time differentiating capacitor of the voltage V_{A}, outputs a pulse V that sets the bistable circuit FF when the time derivative of the voltage V_{A} becomes negative. The bistable circuit FF set by the pulse V, provides a logic signal Q to the control circuit DRIVER, which turns on the switch SW restarting a new charge phase of the inductor L.

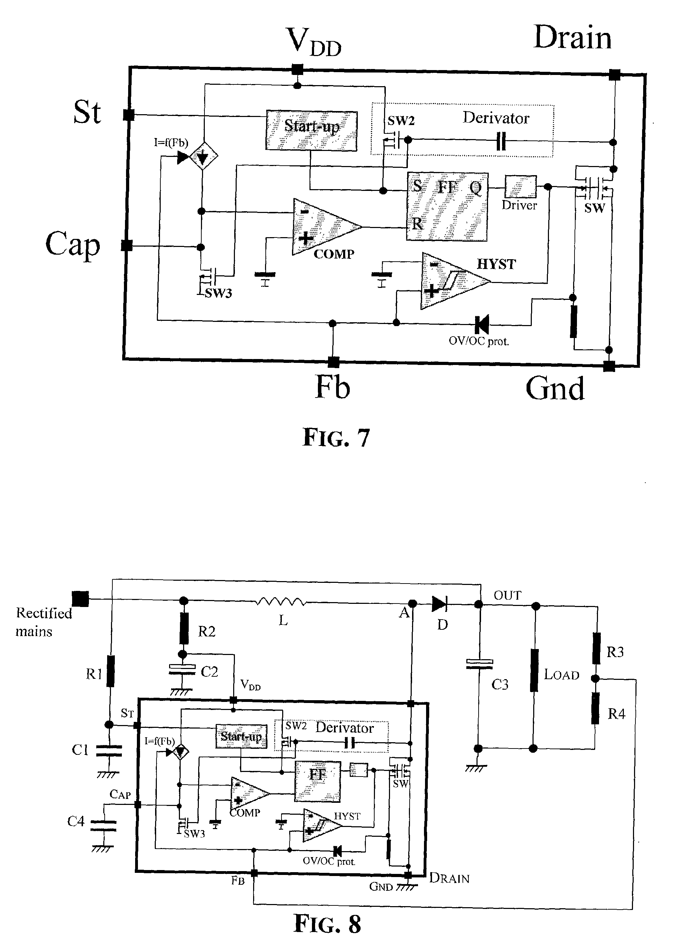

Figure 7 shows a preferred embodiment of a driving circuit of the invention in the form of an integrated device. The pin DRAIN is connected to the terminal of a PWM driven inductor, that is to the node A of the line for outputting current toward the load. Customarily, the device has a pin GND for ground connection, a supply pin VDD for connection to a power supplyand other pins ST, CAP and FB whose function will be illustrated later.

As may be noticed, the depicted driving circuit comprises a bistable circuit FF, a power switch SW and a driver stage DRIVER of the power switch.

According to this embodiment, the time differentiating element of the block DERIVATOR is basically a capacitor connected between the DRAIN node and the gate of a second switch SW2 that switches the set input S of the bistable circuit FF to the supply voltage VDD.

When the voltage on the node DRAIN drops because of the nullification of the current in the inductor, the differentiating capacitor absorbs current (i.e. the derivative signal becomes negative) from the gate of the switch SW2 which turns on thus momentarily coupling the set input S of the bistable circuit FF to the supply voltage VDD of the circuit. The output Q of the bistable circuit FF switches to an active state turning on the power switch SW.

Differently from similar known driving circuits, the circuit of the invention does not require any sensing resistor to be connected in series to the inductor or any auxiliary winding magnetically coupled to it. Moreover, the time differentiating DERIVATOR can be integrated on the same chip of the power switch SW and of the relative control and drive circuitry.

The integrated device of Figure 7 may be used to realize a power supply similar to that of Figure 5a, as depicted in Figure 8, or similar to that of Figure 5b.

Optionally, the integrated device of the invention may comprise, as shown in the figures, also a start-up circuit START-UP that generates a set pulse for the bistable circuit when a pre-established maximum time has elapsed from the last reset pulse without the block DERIVATOR generating any set pulse. This maximum time interval is determined by the capacity C1 and by the resistance R1 connectable to the dedicated pin ST of the device as shown.

According to the embodiment shown, a turn off circuit of the switch SW, basically composed of COMP and SW3 generates a reset pulse of the bistable circuit FF after a pre-established time from the last generated set pulse (fixed turn-on time T_{ON}). This pre-established time is determined by the capacity of the capacitor C4, connected to the pin CAP of the device as shown and by the charging current I. Substantially, when in the differentiating circuit DERIVATOR a negative derivative signal is applied to the gate of the switch SW2, it switches also a third switch SW3, letting the capacitor C4 discharge. When the voltage on the nodes of the capacitor C4 drops below a pre-established threshold, the comparator COMP generates a reset pulse (R) for the flip-flop FF, that turns off the power switch SW.

A hysteresis comparator HYST receives a feedback signal that is fed to the dedicated pin FB. The feedback signal is representative of the output voltage that is provided to the load. The HYST comparator turns off and on the power switch SW when the feedback signal surpasses the upper and lower thresholds, respectively.

In the shown embodiment, the feedback signal is also used to regulate the charging current I of the capacitor C4, in order to vary the turn on time of the power switch SW in function of load conditions.

The feedback signal can be customarily tapped from a resistive voltage divider R3, R4 connected in parallel to the load LOAD, as depicted in Figure 8.

Optionally, the driving circuit of the invention may also be provided, according to a common technique, of a blanking circuit, not depicted in Figure 7, connected between the output of the comparator COMP and the reset input R of the flip-flop FF in order to mask the noise due to the switching of the power switch SW.

## Claims

1. A method for detecting the null current condition in a PWM driven inductor (L) connected between a voltage source node and a second circuit node (A) of a line for outputting current to a load (D, C3, C_{BULK}, LOAD), comprising:
a) time differentiating the voltage (V_{A}) present on said second node (A) generating a derivative signal;
b) monitoring the instant when said derivative signal becomes negative;
c) signaling the verification of a null current condition in said inductor (L) each time that said derivative signal becomes negative.

2. The method of claim 1, comprising filtering preliminarily said voltage (V_{A}) present on said second node (A) from noise before generating said derivative signal.

3. An integrated PWM driving circuit detecting the null current condition in an inductor (L) connected between a voltage source node and a second node (A) of a line for outputting current toward a load (D, C3, C_{BULK}, LOAD), comprising a power switch (SW) connected between said second node (A) and a ground node (GND) of the circuit, a PWM control circuit of the power switch (SW) in function of load conditions including a bistable stage (FF) coupled to a control terminal of the power switch (DRIVER, SW), **characterized in that** it comprises
time differentiating circuit means (DERIVATOR) coupled to said second node (A), generating a pulse setting said bistable output stage (FF) when the voltage (V_{A}) on said second node (A) drops.

4. The integrated driving circuit according to claim 3, wherein said circuit means (DERIVATOR) are composed of a second switch (SW2) that switches the set input (S) of said bistable stage (FF) to a supply voltage (VDD) of the circuit, and a capacitor connected between said second node (A) and a control node of the second switch (SW2).

5. The integrated driving circuit according to claim 3, wherein said control circuit comprises a turn-off circuit (COMP, SW3) of said power switch (SW) generating a reset pulse (R) of said bistable stage (FF) after a pre-established time from a setting of the bistable stage (FF).

6. The integrated driving circuit according to claim 3, wherein said control circuit comprises a start-up circuit (START-UP) generating a set pulse (S) for said bistable stage (FF) when a maximum pre-established time has elapsed from a last reset (R) pulse without said time differentiating circuit means (DERIVATOR) having set (S) the bistable stage (FF).

7. The integrated driving circuit according to claim 3, comprising a feedback pin (FB) for receiving a feedback signal and a hysteresis comparator (HYST) input with said feedback signal for forcing said power switch (SW) in a conduction state if said feedback signal drops below a pre-established threshold.

8. A boost converter of the rectified mains voltage applied to an input (RECTIFIED MAINS) generating on an output node (OUT) a DC voltage of a certain nominal value, comprising an inductor (L) connected to said input, and a clamping diode (D) connected in series to said inductor to the output node (OUT), a bulk capacitor (C3) connected between the output node (OUT) and a ground node (GND), a driving circuit including:
a power switch (SW) connected between the intermediate node (A) between said inductor (L) and said diode (D) and said ground node (GND),
a PWM control circuit of the power switch (SW) in function of the load and comprising a bistable output stage (FF) coupled to a control terminal of said power switch (DRIVER, SW) to turn-on the power switch (SW) when the current in said inductor becomes null,
**characterized in that** said driving circuit is as defined in claim 3.

9. The converter according to claim 8, further comprising means monitoring load conditions and generating a feedback signal.

10. The converter according to claim 9, wherein said monitoring means comprise a resistive voltage divider (R1, R3) connected between the output node (OUT) and the ground node (GND), said feedback signal being a scaled replica of the output voltage.

11. A power supply directly connectable to the mains comprising a rectifying bridge of the mains voltage, a power factor correction circuit (PFC) input with the rectified mains voltage and producing a DC voltage of a certain nominal value on a bulk capacitor (C_{BULK}), **characterized in that** said power factor correction circuit (PFC) constitutes with said bulk capacitor (C_{BULK}) a boost converter as defined in claim 8.
